# EUROPEAN PATENT APPLICATION

(11) **EP 3 321 232 A1**
(43) Date of publication of application: **16.05.2018**
(21) Application number: 17201968.9
(22) Date of filing: 15.11.2017
(51) Int. Cl.: C02F 1/00, C02F 1/32, C02F 1/461, C02F 103/42

(54) **CONTROL UNIT, MODULAR DEVICE AND TREATMENT SYSTEM FOR VOLUMES OF WATER**

(30) Priority: 15.11.2016 ES 201631355
(71) Applicant: I.D. Electroquimica, S.L., 03114 Alicante (ES)
(72) Inventor: SÁNCHEZ CANO, Gaspar, 03114 Alicante (ES); CODINA RIPOLL, Guillermo, 03114 Alicante (ES); PÉREZ MALLOL, Jose Ramón, 03114 Alicante (ES)
(74) Representative: Balder IP Law, S.L.

(57) **Abstract**

The invention relates to a control unit (100) of a treatment system for a volume of water (600), which comprises:
- a plurality of slots (105) adapted to house a plurality of modular devices (200) that provide information on the volume of water (600), said information being associated to a plurality of water treatment techniques;
- a user interface (511) configured to receive one or more commands from a user; and
- central control means (510) configured to control a plurality of actuators (530) associated to the plurality of water treatment techniques, depending on information on the volume of water (600) provided by the plurality of modular devices and the commands received through the user interface (511).

The invention also relates to a modular device (200) for regulating a volume of water (600). And to a regulation system for volumes of water (600), comprising such control unit (100) and at least one of these modular devices (200).

## Description

### Field of the invention

The present invention relates to the field of treating volumes of water and, more specifically, to a system for controlling, treating and regulating water in a swimming pool.

### Background of the invention

Currently, a large variety of treatments that enable the water quality of a specific volume of water (such as a swimming pool, a spa or reservoir) to be controlled and regulated, thus ensuring that the water has suitable conditions for the use thereof, are known. Said treatments include, among others, electrolysis, ultraviolet (UV) exposure, a combination of electrolysis and UV exposure (or Neolisis®) or chemical substance dosage. The application of said treatments has been automated through a set of sensors, control means and actuators in different configurations, making the use thereof easier for the user and enabling the different parameters considered in the treatment technique to be kept within specific limits.

In the case of electrolysis, the water to be treated is subjected to a current that simultaneously gives rise to cathodic reduction and anodic oxidation processes. Said processes, which require additional salts to be added in order to reach a certain minimum conductivity in the water, are used for purifying and disinfecting the same. The electrolysis process increases the pH of the water, which means that the continuous addition of both salts and a pH reducer must be correctly managed. Chlorine and sodium hydroxide are typically generated as a result of the electrolysis, which in turn recombine into hypochlorous acid, which is capable of reducing the levels of organic matter and pathogens. Thus, the addition of chlorine in solid or liquid form is prevented, as well as reducing the chloramines without increasing the waste cyanuric acid, saving water and energy. However, it requires the salt tank to be periodically filled, as well as the filters to also be periodically cleaned.

For example, patent document ES 2439644 T3 presents an electrolytic device for the production of chlorine with two electrodes in the form of a thin plate with a specific size ratio. Said electrodes generate electrical discharges on an aqueous ionic solution of sodium chloride, said sodium chloride being previously dissolved in an auxiliary pipe that extracts water from the main body and returns it after the treatment thereof.

In a second example, patent document ES 2345531 T3 presents a method for reducing or eliminating the effects of micro-organisms in volumes of water, such as for example swimming pools. The method comprises dissolving a soluble magnesium halide salt and treating said solution in an electrolytic cell to form a solution of hypohalous acid. Said treatment is carried out in a pipe separated from the main volume of water before returning the treated water to the main volume.

Apart from that, the ultraviolet radiation technique is based on the application of light in said frequency range to disinfect and eliminate live micro-organisms in the water of the swimming pools to be treated, preventing the addition of chemical products that can affect the smell or pH thereof. In addition, UV radiation can eliminate chloramines present in the water of swimming pools, which are typically limited since they can cause irritation of the skin, mucous membranes and airways. As salt and filter cleaning are not required, it also entails water and energy savings in the treatment. A drawback that can be mentioned is that it is a local treatment that cannot cause the oxidation of organic matter, which means that it tends to require oxidising agents or disinfectants that require a continuous pH control.

The methods described, as well as any other water treatment method known in the state of the art, can be combined in a single system. This is case with Neolisis®, which combines electrolysis and UV radiation in the same system. For example, patent document ES 2373601 B1 presents a water purification method that prevents the use of salts and other chemical products by simultaneously applying electrolysis and ultraviolet radiation on the water to be treated.

However, all the systems described are limited to the treatment technique or techniques initially integrated at hardware or software level. That is, they are not scalable or reconfigurable, meaning that other additional treatment techniques cannot be integrated into the system once installed.

### Description of the invention

The present invention resolves the problems described above by means of a distributed design wherein the control logic is distributed between a central control unit and a series of modular devices with differentiated functionalities. This approach enables different water treatment techniques to be integrated into the same system, making it possible to modify or add the techniques implemented at all times by simply changing the modules connected to the central control unit.

A first aspect of the invention discloses a control unit of a treatment system for volumes of water (such as, for example, a swimming pool or spa), comprising a plurality of slots adapted to house a plurality of modular devices, said modular devices providing differentiated functionalities for the implementation of a plurality of treatment techniques. Said treatment techniques preferably comprise a subset selected from electrolysis, ultraviolet radiation, a combination of electrolysis and UV radiation (or Neolisis®) or chemical species dosage; or all of said techniques. However, particular embodiments of the invention can implement additional treatment techniques known in the state of the art.

The control unit also comprises a user interface through which a user can introduce one or more control commands that correspond to treatment techniques implemented at any time. Said user interface can also show information related to the state of the volume of water in real time, to the available control options, to the previously introduced configuration, etc. Preferably, said user interface comprises a touchscreen, although particular embodiments of the same can be implemented with any other interface technology known in the state of the art, such as, for example, buttons, screens, keyboards, speakers, voice controllers, etc.

The control unit comprises central control means that, together with the modular devices connected to the corresponding slots, enables the different treatment techniques to be implemented and managed. Preferably, said central control means comprises a printed circuit board (PCB; or printed board assembly, PBA), with a plurality of pins, such that each slot of the control unit houses one or more of said pins. The slot is morphologically adapted in the area of the pins in order to receive the corresponding connectors of the modular devices, fastening the position of said devices and preventing their disconnection thereof. However, particular embodiments of the control unit may comprise additional elements to fasten the modular devices, such as, for example, covers, mechanical connectors, etc.

In some embodiments, the control unit comprises ports corresponding to any communication technology known in the state of the art, such as, for example, an Ethernet port in order to be connected to a remote server. Thus, said remote server can add different functionalities to the control unit depending on each particular implementation, such as remote control, software updating, compilation of statistical data, provision of environmental information, etc.

A second aspect of the invention discloses a modular device for treating a volume of water comprising first connection means adapted to be connected to a slot of the control unit, the control unit preferably being in accordance with any of the embodiments of the first aspect of the present invention as previously described. The modular device further comprises second connection means adapted to be connected to a measurement probe to measure one or more parameters of the volume of water, to supervise the state of the volume of water. Likewise, the modular device comprises modular control means that manages, together with the central control means of the control unit, at least one technique of the plurality of available treatment techniques. That is, different embodiments of the modular device provide different functionalities that can be combined in the same control unit to implement different treatment techniques.

In some embodiments, each modular device comprises the modular control means and/or the second connection means that implement one of the following functionalities, although particular embodiments of said modular devices can add other treatment, regulation and/or communication functionalities known in the state of the art:
- Reading data from a multi-parametric probe that is inserted into the volume of water, and which provides information on flow, pressure, temperature, etc.
- Reading data from a pH probe.
- Reading data from a chlorine probe, which can be of the redox type (Oxidation Reduction Potential, ORP) or of the ppms type.
- Management of an Ethernet connection, of a MODBUS connection or of another communication protocol.

A third aspect of the invention discloses a treatment system for volumes of water that combines a control unit in accordance with any of the embodiments of the first aspect of the invention with a plurality of modular devices in accordance with one or more embodiments of the second aspect of the invention. In some cases, the treatment system for volumes of water comprises several modular devices according to multiple embodiments of the second aspect of the invention, that is, with a plurality of modular devices with functionalities that are different to each other. It is also possible that the treatment system for volumes of water comprises several modular devices according to any of the embodiments of the second aspect of the invention; in this case, several of the modular devices can have the same functionality.

The control unit, modular devices and treatment system for volumes of water of the invention provide, therefore, an easily scalable and reconfigurable solution, and that can also be adapted in order to implement any treatment technique known in the state of the art or developed in future by simply adapting the connections and the control logic of the modular devices. These and other advantages will be apparent in light of the detailed description of the invention.

### Brief description of the figures

To complement the description and for the purpose of aiding to better understand the features of the invention according to a practical embodiment thereof, a set of figures is attached as an integral part of the description in which the following has been depicted with an illustrative and non-limiting character:
Figure 1 is a front view of the control unit, in accordance with a preferred embodiment of the present invention.
Figure 2 is a rear view of the control unit and modular devices that are connectable to said control unit, in accordance with a preferred embodiment of the present invention.
Figure 3 is a side view of the control unit and modular devices, as well as auxiliary probes that are connectable to said modular devices, in accordance with a preferred embodiment of the present invention, as well as a pipe that transports the water to be treated as an exemplary application.
Figure 4 schematically illustrates the different hardware and software elements involved in the regulation system, in accordance with a preferred embodiment of the present invention, as well as a volume of water as an exemplary application.

### Description of an embodiment of the invention

The invention described below is not limited to the specific embodiments presented, but rather encompasses, for example, the variants that can be carried out by the person with average skill in the art (for example, with regards to the selection of materials, dimensions, components, configuration, etc.), within that which is disclosed in the claims.

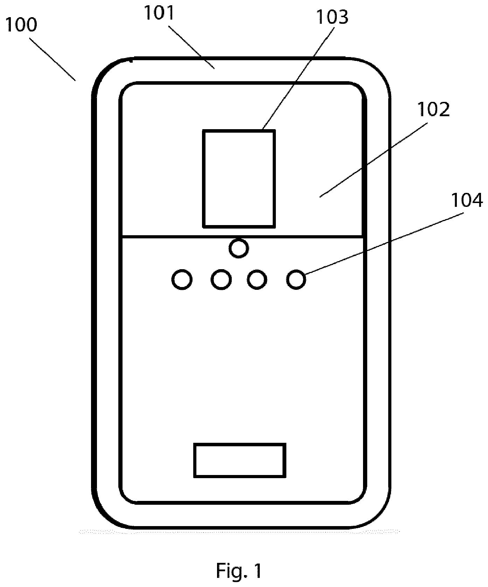

Figure 1 shows a front view of a control unit 100 according to a preferred embodiment of the invention. The control unit 100 comprises a rectangular prism-shaped main body 101 with rounded edges, in the front of which a touchscreen 102 is integrated. Said touchscreen comprises a plurality of indicators 103 and controls 104 that show the user information about the treatment system and collect the instructions respectively thereof. However, it must be noted that other preferred embodiments can integrate any other user interface technology known in the state of the art.

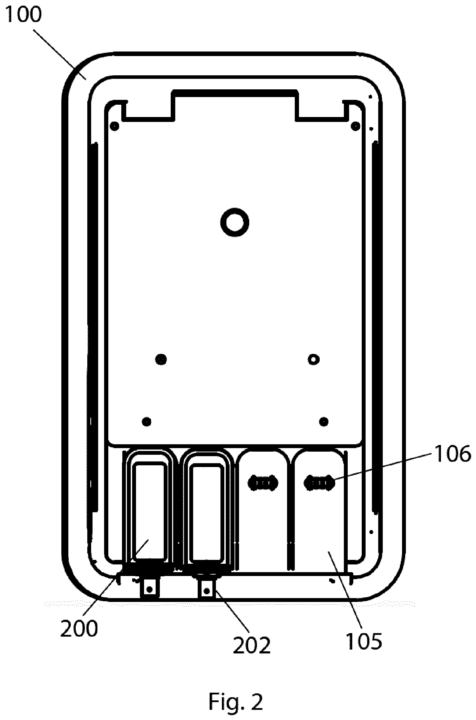

Figure 2 shows a rear view of the same control unit 100, as well as both preferred embodiments of the modular devices 200 that are connected to slots 105 of said control unit 100. The connection is carried out through the connection pins 106 of the PBA of the control unit 100 and first connection means 201 of the modular devices 200 adapted to said technique. The modular devices 200 also comprise second connection means 202 to connect to other elements, typically to probes that provide information on different parameters representative of the water quality.

In the described preferred embodiment, the control unit 100 comprises four slots or bays in the rear lower portion of the main body 101, therefore being able to simultaneously house four modular devices 200, each one of which provides a functionality, which can be a different functionality for each modular device 200, or it is also possible that two or more modular devices 200 have the same functionality. This way, for example, it is possible to have two pH probes, thereby duplicating the functionality of reading the pH value; this can be advantageous when using equipment for injecting CO₂ for pH regulation, in which it is convenient to have the pH measure before and after the CO₂ injection. The modular devices 200 can be easily connected and disconnected, enabling the features and treatment techniques of the system to be modified as a whole. That is, the modular devices 200 can be combined in different ways according to the technique or techniques that are to be implemented on each occasion. The modular devices 200 comprise modular control means that provides them with plug & play properties. Each modular device 200 comprises computer encoding means stored in the modular control means thereof that communicate with the central control means of the control unit 100, providing said central control means with the information necessary to connect and manage said modular device 200, without requiring the user to manually install components.

In particular, the following preferred functionalities for the modular devices 200 are envisaged:
- Reading data from a multi-parametric probe or from a probe holder unit providing information on different parameters such as flow, pressure, temperature, etc.
- Reading data from a pH probe, providing information on the pH value of the water.
- Reading data from a chlorine probe, either an ORP or ppm probe.
- Management of an Ethernet connection.
- Management of a MODBUS connection.

For greater ease of use for the user of the system, these modular devices can be provided in different colours: for example, blue for connection to a pH probe, yellow (or grey for example) for connection to a probe holder unit (multi-parametric), red for an ORP chlorine probe, green for a ppm chlorine probe. Logically, other colours or assignments thereof are possible.

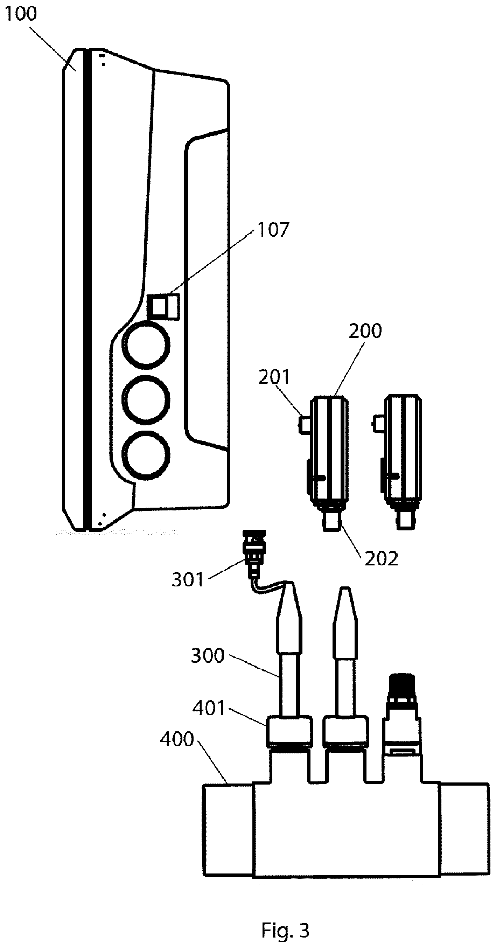

Figure 3 shows a side view of the control unit 100 and modular devices 200 described, wherein the first connection means 201 of said modular devices 200 and the Ethernet port 107 of the control unit 100 can be more clearly seen. Likewise, a portion of the water treatment system formed by two probes 300 and a pipe 400 through which the water circulates before entering the specific water treatment equipment (as can be seen in Neolisis® equipment, or UV exposure equipment) has been shown as an exemplary application of the invention. The pipe 400 comprises a plurality of extensions 401, which are adapted to insert probes 300 with different functionalities (multi-parametric, pH, ORP, etc.), which are associated to different water treatment and regulation techniques implemented by the system. Each probe 300 is connected to the second connection means 202 of the associated modular device 200 thereof, through a connector 301 of the probe 300 itself. It must be noted that the technology of said connector 301, and, therefore, that of the associated second connection means 202, can vary from one implementation to another, which can be both wired and wireless technologies in accordance with any protocol and link known in the state of the art.

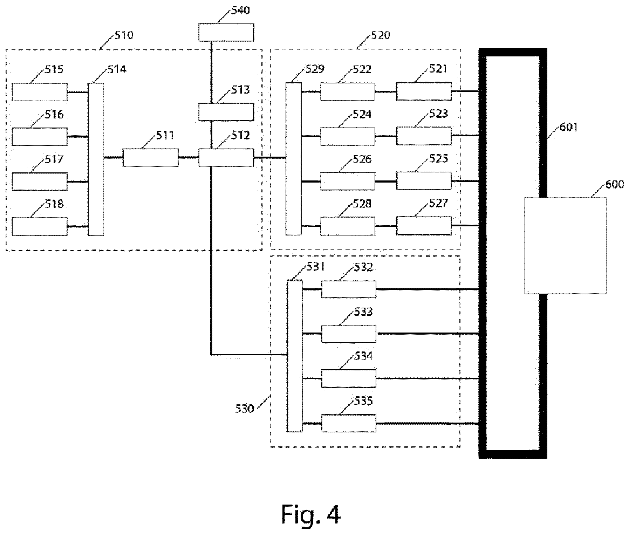

Lastly, figure 4 schematically shows the different logic blocks involved in the operation of the system, in accordance with an embodiment thereof. Said logic blocks have been classified into central control means 510, sensing means 520 and actuators 530. However, the physical organisation and distribution of the different computer program codes stored to manage the elements and devices involved can vary depending on the particular implementation. A volume of water 600 has also been shown as an exemplary application. Both the sensing means 520 and the actuators 530 act on a conduit or pipe 601 that extracts part of the liquid from the main volume of water 600 for the sensing and treatment thereof before returning it to said volume of water 600. It is also possible for this pipe 601 to directly be the inlet pipe into the water treatment equipment.

In particular, the central control means 510 comprise a user interface 511 implemented by means of a thin-film-transistor (TFT) screen, for example a thin-film-transistor liquid-crystal display (TFT-LCD). The user interface 511 is connected to a PCB 512 as well as to a software interface 514. Said software interface 514 links the user interface 511 and the PCB 512 to the control software of each one of the treatment techniques implemented by the system:
- Electrolysis software 515.
- Neolisis® software 516.
- Ultraviolet radiation software 517.
- Dosage software 518.

In turn, the PCB 512 communicates through an Ethernet interface 513 with a remote server 540 that provides remote control functionalities, etc. Likewise, the PCB 512 connects to the drivers of the sensing means 520 and to the controllers of the actuators 530 by means of both bidirectional links. The management of the communication protocols involved (such as Ethernet, MODBUS, etc.), preferably uses the software stored in a modular device 200 specific for each one of said protocols.

The PCB 512 communicates with the drivers of the sensing means 520 stored in the distributed control means of the modular devices 200 through a bus 529. In particular, the following associated sensors and controllers are represented:
- A first pH sensor 521, with a first driver 522.
- A second chlorine reduction-oxidation (REDOX) sensor 523, with a second driver 524.
- A third chlorine concentration in parts per million (ppm) sensor 525, with a third driver 526.
- A fourth water flow and temperature sensor 527 with a fourth driver 528.

With regards to the actuators 530, the following water treatment equipment is represented, which are managed from the PCB 512 through a treatment interface 531:
- Electrolysis cell 532.
- Ultraviolet radiation equipment 533.
- Neolisis® equipment 534, which combines an electrolysis anode and cathode with a UV lamp. Said Neolisis® system can therefore be independently implemented or be implemented by simultaneously activating the electrolysis cell 532 and the ultraviolet radiation system 533.
- Dosage equipment 535, which is typically implemented by means of a peristaltic pump.

Other particular implementations can incorporate a different set of sensors and actuators known in the state of the art. Likewise, said sets can be modified during the useful life of the system by simply modifying the modular devices 200 connected to the control unit 100, and by connecting the probes and/or actuators associated to said modular devices 200.

Likewise, it must be noted that the monitoring information provided by the sensing means 520 is combined in the PCB 512 with the configuration commands of the user that are introduced by means of the user interface 511, automatically generating the control instructions of the actuators 530. However, the particular inputs and outputs of the decision-making algorithms implemented by the system can vary from one particular implementation to another. For example, said algorithms may comprise preset maximum and minimum thresholds on one or multiple sensed variables, configurable thresholds, timers, target values, etc.

Each treatment technique can invoke different combinations of software, actuators, drivers and communication links. For example, in order to implement a treatment technique by means of electrolysis, the electrolysis software 515, the electrolysis cell 532, the first driver 522, and depending on the particular implementation, the second driver 524 and/or third driver 526 would consequently be activated. In order to implement a treatment technique by means of Neolisis®, the Neolisis® software 516, the electrolysis cell 532, the UV radiation equipment 533, the first driver 522, and the second driver 524 would be activated. For UV radiation, the UV radiation software 517, the UV radiation equipment 533, and any of the driver combinations described for electrolysis would be activated. Lastly, for the dosage treatment technique, the dosage software 518, the dosage equipment 535, the first driver 522, the fourth driver 528 and, optionally, the second driver 524 and/or the third driver 526 would be activated. In all the cases, a modular device 200 specific for activating the Ethernet communications would be used. The indicators 103 and controls 104 of the touchscreen 102 can be dynamically adapted depending on the technology or technologies implemented.

Therefore, the treatment system, control unit and modular devices described enable a basic model as a basis and scaled and/or reconfigured overtime. Said scaling can be considered from both the point of view of the end user, who can change the modules connected to the control unit; and from the point of view of the equipment developer, who can create new modular devices with new functionalities. Both updates would be carried out very simply due to the plug&play features of the devices, unlike in the solutions known in the state of the art, which would entail the deactivation of the entire system and the substitution thereof by a new one. Likewise, in the event of a failure, only the affected module would need to be replaced, and not the entire equipment.

In this text, the word "comprises" and its variants (such as "comprising", etc.) should not be understood in an exclusive sense, i.e. they do not exclude the possibility of that which is described including other elements, steps, etc.

## Claims

1. A control unit (100) of a treatment system for a volume of water (600), **characterised in that** it comprises:
- a plurality of slots (105) adapted to house a plurality of modular devices (200) that provide information on the volume of water (600), said information being associated to a plurality of water treatment techniques;
- a user interface (511) configured to receive one or more commands from a user; and
- central control means (510) configured to control a plurality of actuators (530) associated to the plurality of water treatment techniques, depending on information on the volume of water (600) provided by the plurality of modular devices and the commands received through the user interface (511).

2. Control unit (100) according to claim 1, **characterised in that** the plurality of treatment techniques comprises electrolysis.

3. Control unit (100) according to any of the preceding claims, **characterised in that** the plurality of treatment techniques comprises ultraviolet radiation.

4. Control unit (100) according to any of the preceding claims, **characterised in that** the plurality of treatment techniques comprises a combination of electrolysis and ultraviolet radiation.

5. Control unit (100) according to any of the preceding claims, **characterised in that** the plurality of regulation techniques comprises regulation by means of chemical dosage.

6. Control unit (100) according to any of the preceding claims, **characterised in that** the central control means (510) comprise a printed circuit board with a plurality of connection pins (106) housed in the plurality of slots (105).

7. Control unit (100) according to any of the preceding claims, **characterised in that** the user interface (511) comprises a touchscreen (102).

8. Control unit (100) according to any of the preceding claims, **characterised in that** it further comprises an Ethernet port (107) adapted to be connected to a remote server (540).

9. A modular device (200) for regulating a volume of water (600), **characterised in that** it comprises:
- first connection means (201) adapted to be connected to a slot (105) of a control unit (100);
- second connection means (202) adapted to be connected to a measurement probe (300) to measure one or more parameters of the volume of water (600); and
- modular control means configured to provide information on at least one treatment technique of the volume of water (600), together with central control means (510) of the control unit (100).

10. Modular device (200) according to claim 9, **characterised in that** the second connection means (202) and the modular control means are adapted to be connected to a multi-parametric probe (300).

11. Modular device (200) according to claim 9, **characterised in that** the second connection means (202) and the modular control means are adapted to be connected to a pH probe (300).

12. Modular device (200) according to claim 9, **characterised in that** the second connection means (202) and the modular control means are adapted to be connected to a chlorine probe (300).

13. Modular device (200) according to claim 9, **characterised in that** the modular control means are configured to manage an Ethernet connection.

14. Modular device (200) according to claim 9, **characterised in that** the modular control means are configured to manage a MODBUS connection.

15. A regulation system for volumes of water (600), **characterised in that** it comprises a control unit (100) according to any of claims 1 to 8 and at least one modular device (200) according to any of claims 9 to 14.
